# FASCICULE DE BREVET EUROPEEN

(11) **EP 0 398 768 B1**
(45) Date de publication et mention de la délivrance du brevet: **02.06.1993**
(21) Numéro de dépôt: 90400900.8
(22) Date de dépôt: 03.04.1990
(51) Int. Cl.: G01L 3/10, G01D 5/24, G01B 7/22

(54) **Capteur capacitif de déplacements et capteur d'angle de torsion comportant au moins un tel capteur capacitif**
Kapazitiver Verschiebungsmessfühler sowie Torsionswinkelaufnehmer unter Verwendung eines solchen kapazitiven Fühlers
Capacitive displacement sensor and torsional angle sensor using at least one such capacitive sensor

(30) Priorité: 04.04.1989 FR 8904402
(43) Date de publication de la demande: 22.11.1990
(73) Titulaire: THOMSON-CSF, 75008 Paris (FR)
(72) Inventeur: Choisnet, Joel, F-92045 Paris la Défense (FR)
(74) Mandataire: Courtellemont, Alain

(56) Documents cités:
- EP-A- 0 108 894
- GB-A- 790 692
- US-A- 3 296 522
- US-A- 3 487 402
- US-A- 4 054 049
- PATENT ABSTRACTS OF JAPAN, vol. 9, no. 16 (P-329)[1739], 23 juin 1985; & JP-A-59 163 530 (FUJI DENKI SEIZO K.K.)

## Description

La présente invention se rapporte aux capteurs capacitifs utilisés pour la mesure de déplacements et plus particulièrement pour la mesure de très petits déplacements tels que la torsion à laquelle est soumis un arbre moteur. Ces mesures de déplacements permettent de déterminer la valeur de la grandeur physique qui a causé le déplacement : température, pression, force, accélération ... Ainsi la mesure de l'angle de torsion d'un arbre moteur permet de déterminer la valeur du couple moteur transmis par cet arbre.

De tels capteurs capacitifs sont connus par exemple par les documents EP-A-108 894 et US-A-3 487 402 ; les capteurs connus sont constitués par des condensateurs dont les électrodes planes, parallèles pour le document EP-A-108 894 ou cylindriques et coaxiales pour le document US-A-3 487 402, sont situées à faible distance l'une de l'autre mais fixées en deux zones relativement éloignées l'une de l'autre, de manière que les déplacements de ces deux zones, l'une par rapport à l'autre, occasionnent des variations de capacité suffisantes pour être exploitées par une électronique de mesure associée au capteur. Ces capteurs connus sont réalisés de telle manière que, en fait, les deux zones ne peuvent se déplacer l'une par rapport à l'autre que dans un mouvement de rotation autour d'un même axe géométrique ; ces capteurs connus ne peuvent donc être utilisés pour déterminer une torsion par la méthode qui consiste à placer un capteur de façon excentrée par rapport à l'axe de torsion afin de mesurer un déplacement en translation perpendiculaire à cet axe.

La présente invention a pour but d'éviter cet inconvénient.

Ceci est obtenu en utilisant des capteurs capacitifs à électrodes cylindriques où les électrodes internes ne sont pas limitées à ne pouvoir se déplacer que dans un mouvement de rotation autour de leur axe de symétrie propre qui est fixe par rapport à leurs électrodes externes.

Selon l'invention, il est proposé un capteur capacitif de déplacements comportant un premier et un second support ayant respectivement un premier et un second axe longitudinal, parallèles entre eux, ces supports étant munis d'électrodes pour former des condensateurs, caractérisé en ce que, pour mesurer des déplacements relatifs des deux supports perpendiculairement au premier et au second axe, le premier support comporte un trou cylindrique dont l'axe géométrique constitue le premier axe, le second support comporte un barreau cylindrique dont l'axe géométrique constitue le second axe, ce barreau étant disposé de manière à traverser librement de trou cylindrique et à avoir ainsi, avec le trou, des parois en regard, et les électrodes sont portées par les parois en regard du trou et du barreau et, au moins certaines, ont des limites parallèles au premier et au second axe.

Il est à noter qu'il est également connu, par le brevet US 4 054 049, de réaliser un capteur capacitif comportant un trou cylindrique et un barreau cylindrique coaxiaux portant, respectivement sur leur paroi interne et sur leur paroi externe, des électrodes qui sont toutes cylindriques. Ce capteur est destiné à mesurer des translations du barreau dans le trou selon la direction de leur axe commun ; cette mesure est déduite de la variation de capacité due au fait que dans la translation une électrode du barreau sort ou rentre un peu dans le volume d'une électrode portée par la paroi du trou. Un tel capteur n'est pas du tout adapté à des mesures de déplacements qui s'effectueraient perpendiculairement à la direction commune de l'axe du trou et du barreau car les variations de capacité dues à de tels déplacements sont très faibles avec ce type de capteurs.

La présente invention sera mieux comprise et d'autres caractéristiques apparaîtront à l'aide de la description ci-après et des figures s'y rapportant, qui représentent :
- la figure 1, un schéma de principe d'un capteur capacitif selon l'invention,
- les figures 2, 3 et 5 des vues en coupe de capteurs capacitifs selon l'invention,
- la figure 4 une vue, en développé, d'une partie du capteur déja représenté sur la figure 3,
- la figure 6, une vue montrant un capteur d'angle, selon l'invention, monté dans un arbre moteur.

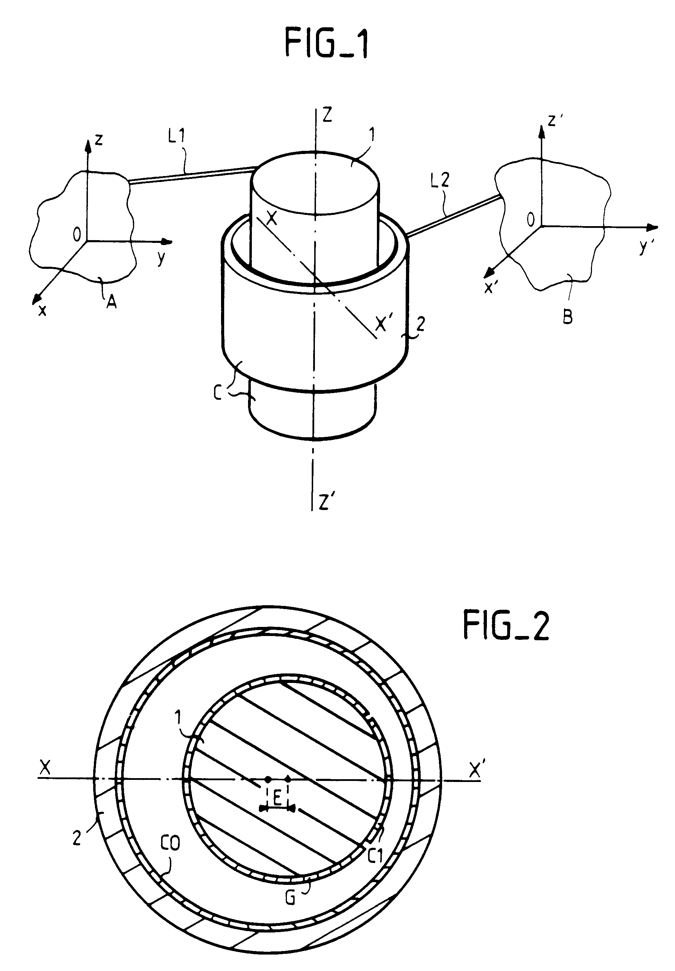

La figure 1 montre comment est réalisé un capteur capacitif selon l'invention. La figure 1 représente un ensemble mécanique comportant deux sous-ensembles indéformables A et B et un capteur, C, fait d'un cylindre plein 1 et d'un cylindre creux 2, qui, au repos, comme il sera indiqué plus loin, ont un même axe longitudinal ZZ'. Au sous-ensemble A est lié un repère trirectangle oxyz et au sous-ensemble B un repère trirectangle o'x'y'z'. Le capteur C comporte des électrodes situées sur la paroi cylindrique du tube plein 1 et sur la paroi interne du tube creux 2 ; ces électrodes déterminent une certaine capacité. Le cylindre 1 est rendu solidaire du sous-ensemble A par une liaison rigide L1, symbolisée par une barre ; de même le cylindre 2 est rendu solidaire du sous-ensemble B par une liaison rigide L2 symbolisée par une autre barre.

Le capteur C de la figure 1 a pour but de mesurer des petits déplacements de B dans le repère oxyz lié à A, ces déplacements étant limités à des translations parallèles à une direction XX' fixe par rapport à oxyz ; dans ce montage les déplacements relatifs de A et B sont identiques aux déplacements relatifs des cylindres 1 et 2 du fait des liaisons rigides L1, L2. L'ensemble selon la figure 1 est réalisé de manière que, au repos, c'est-à-dire dans une position initiale servant d'origine à la mesure des déplacements entre A et B,
- les axes des cylindres 1 et 2 soient confondus selon l'axe ZZ'
- l'axe ZZ' soit perpendiculaire à la direction XX' des déplacements à mesurer.

Ces déplacements de B par rapport à A déterminent une excentricité du cylindre plein 1 dans le cylindre creux 2, les axes des cylindres 1 et 2 restant parallèles.

La figure 2 est une vue en coupe, dans un plan perpendiculaire à ZZ' passant à travers les cylindres 1 et 2, du capteur C de la figure 1. Le cylindre creux 2 porte sur toute sa paroi interne une électrode C0 ; sur la figure 2 cette électrode est représentée comme une couche conductrice tapissant la paroi interne du cylindre 2 mais, dans les réalisations où le cylindre 2 est en matériau conducteur, une telle couche ne sera pas nécessaire. Le cylindre plein 1 est un cylindre isolant qui porte sur sa paroi cylindrique deux couches conductrices formant électrodes : une électrode proprement dite C1 disposée, sur la coupe selon la figure 2, entre deux génératrices du cylindre distantes d'environ 70 degrés, et une électrode de garde G isolée de l'électrode C1 et dont la coupe est comprise entre deux génératrices du cylindre distantes de quelques degrés des deux génératrices délimitant l'électrode C1. Les électrodes C0 et C1 constituent les deux électrodes d'un condensateur dont la capacité varie avec l'excentricité E des cylindres 1 et 2 l'un par rapport à l'autre ; l'inverse de la valeur de la capacité est une fonction sensiblement linéaire de l'excentricité E, la linéarité étant d'autant meilleure que
- le rapport du rayon du cylindre plein 1 et du rayon intérieur du cylindre creux 2, est plus proche de 1,
- l'angle entre les génératrices qui délimitent l'électrode C1 est petit,
- la valeur maximum que peut prendre l'excentricité est petite devant le rayon du cylindre plein.

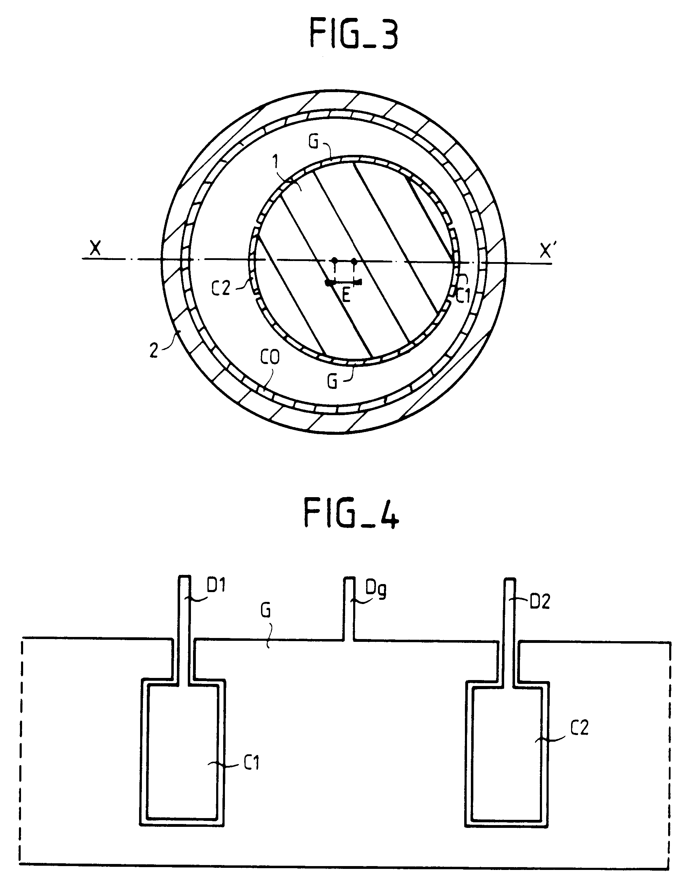

La figure 3 est une vue en coupe, relative à une autre façon de réaliser le capteur C de la figure 1. Ici encore, le cylindre creux 2 porte, sur toute sa paroi interne, une électrode C0 représentée comme une couche conductrice et le cylindre plein A porte une électrode de garde G. Par contre cette électrode de garde n'entoure pas une seule mais deux électrodes proprement dites, C1 et C2, comme il apparaît sur la figure 4, qui est une vue en développé de ces électrodes après une coupure selon une génératrice du cylindre plein ; les bords de la coupure sont représentés en traits interrompus sur la figure 4. La figure 4 montre également les connexions D1, D2, Dg relatives respectivement aux électrodes C1, C2, G.

Le capteur selon les figures 3 et 4 se distingue essentiellement du capteur selon la figure 2 par la présence de l'électrode supplémentaire C2, symétrique de l'électrode C1 par rapport à l'axe du cylindre plein 1 ; cette électrode supplémentaire constitue, avec l'électrode C0, un second condensateur de mesure, dont la capacité varie également avec l'excentricité E, mais en sens contraire des variations du condensateur que constitue l'électrode C1 avec l'électrode C0. Soient C1 et C2 les valeurs des deux condensateurs C1, C0 et C2, C0 ; il est à noter que, à dimensions égales par ailleurs, le rapport (C1-C2)/(C1+C2), obtenu avec le capteur selon les figures 3 et 4, présente une meilleure linéarité en fonction de l'excentricité E que la linéarité de C1 en fonction de E, dans le cas du capteur selon la figure 2. De plus, lorsque la mesure de l'excentricité E est effectuée à l'aide du rapport (C1-C2)/C1+C2), les dérives éventuelles liées à la variation de la constante diélectrique du milieu interélectrode, sont éliminées ; il en est de même des dérives de zéro liées aux variations dimensionnelles des cylindres 1 et 2 avec la température. Par contre ces dérives perturbent la mesure de l'excentricité E effectuée à partir de la seule valeur du condensateur C1.

Ces capteurs capacitifs, avec des électrodes disposées comme indiqué sur les figures 2 et 3, permettent la mesure de très petits déplacements suivant la direction XX' mais sont pratiquement insensibles à de très petits déplacements suivant l'axe ZZ' (voir figure 1) commun aux cylindres 1 et 2 dans leur position de repos, et sont également pratiquement insensibles à de très petits déplacements suivant un axe YY' perpendiculaire à XX' et ZZ', c'est-à-dire suivant un axe qui serait perpendiculaire à XX' dans le plan des figures 2 et 3.

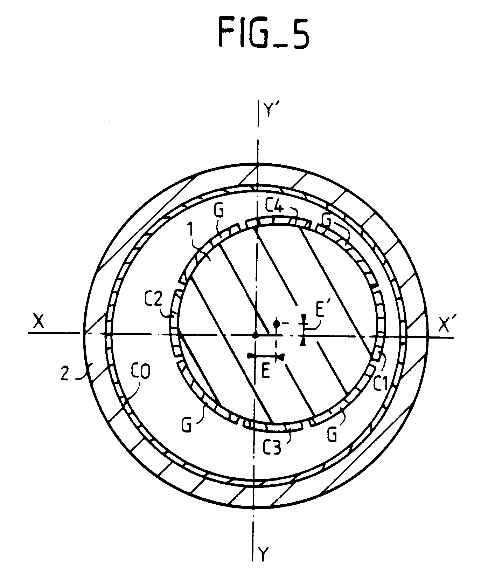

La figure 5 montre, vu en coupe selon un plan perpendiculaire aux axes des deux cylindres porte-électrodes, un capteur capacitif permettant la mesure de très petits déplacements suivant les axes XX' et YY' dont il vient d'être question ci-avant. Le capteur ne se distingue de celui décrit à l'aide des figures 3 et 4 que par l'adjonction de deux électrodes supplémentaires, C3, C4, sur la paroi du cylindre plein 1 ; ces électrodes sont situées à 90 degrés des électrodes C1, C2, autour de l'axe du cylindre 1. Cette disposition d'electrodes permet de mesurer les composantes, selon XX', des déplacements à l'aide des condensateurs C1 et C2 constitués respectivement par les électrodes, C0, C1 et C0, C2 et les composantes, selon YY', à l'aide des condensateurs C3, C4 constitués respectivement par les électrodes C0, C3 et C0, C4.

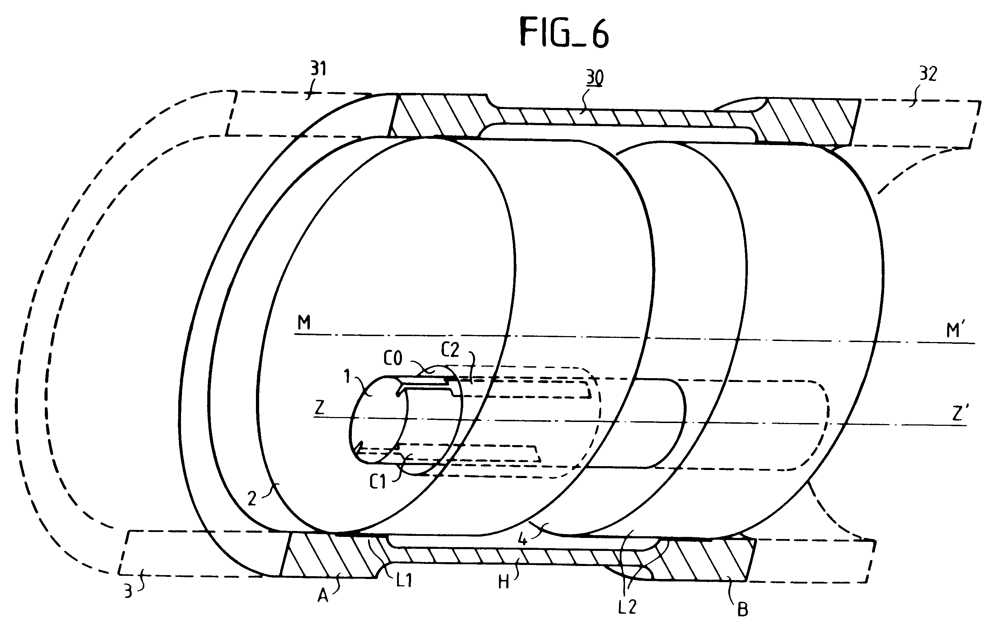

La figure 6 montre comment, avec un capteur capacitif du type décrit à l'aide des figures 1, 3 et 4 à été réalisé un capteur d'angle de torsion qui a été monté sur un arbre moteur 3. La figure 6 est une vue simplifiée sur laquelle n'ont pas été représentés différents éléments afin d'alléger le dessin et de faciliter la compréhension.

L'arbre moteur 3 est creux et comporte trois parties métalliques : un tube intermédiaire 30 prolongé à chacune de ses extrémités par des tubes 31, 32 qui n'ont été représentés que sur une faible partie de leur longueur. Ces tubes 31, 32 ont été dessinés en traits interrompus et leur raccordement au tube 30, qui dans l'exemple décrit est un raccordement par flasques rendues solidaires par vis, n'a pas été représenté. De plus seule une moitié de ces trois tubes, obtenue par un plan de coupe passant par l'axe MM' de l'arbre 3, apparaît sur la figure 6, de manière à laisser voir le contenu du tube intermédiaire 30.

Le tube 30 n'est pas d'épaisseur constante sur toute sa longueur : il possède deux partie épaisses, A, B, situées respectivement à ses deux extrémités, de part et d'autre d'une partie plus mince H. Sous les efforts que subit l'arbre moteur 3 pendant son fonctionnement, la torsion est plus importante dans la partie H que dans le reste de l'arbre et c'est là qu'une mesure est effectuée avec un capteur capacitif afin de permettre de déterminer la valeur du couple transmis par l'arbre 3. Pour cela deux pièces métalliques 2, 4 formant bouchons, prennent appui respectivement sur la paroi interne des parties A et B, dont elles sont rendues rigidement solidaires par soudure ; sur la figure 6 ces liaisons par soudure ont été dessinées en traits plus épais. Les pièces 2 et 4 sont percées de trous cylindriques qui sont alignés suivant un même axe ZZ' quand l'arbre 3 n'est soumis à aucun couple. Le trou percé dans la pièce 2 est un trou dont la paroi métallique correspond à l'électrode C0 des figures 2, 3 et 5. Dans le trou de la pièce 4 est enfoncé une extrémité d'un barreau cylindrique isolant en céramique, 1 ; le montage du barreau 1 dans la pièce 4 s'effectue par frettage, le barreau de céramique étant refroidi et la pièce métallique 4 étant chauffée avant d'être assemblés. Le barreau 1 se prolonge à l'intérieur et légèrement au delà du trou percé dans la pièce 2. Au niveau de sa traversée du trou percé dans la pièce 2 le barreau 1 porte sur sa paroi deux électrodes C1, C2 obtenues par sérigraphie ; ces électrodes correspondent aux électrodes C1, C2 décrites à l'aide des figures 3 et 4.

Sur la figure 6 l'électrode de garde portée par le barreau 1 et correspondant à l'électrode G des figures 3 et 4, n'a pas été représentée, de même que n'ont pas été représentés :
- trois autres capteurs capacitifs qui sont respectivement décalés de 90, 180 et 270 degrés, autour de l'axe MM', par rapport au capteur dessiné sur cette figure,
- le dispositif de couplage assurant la liaison électrique entre les quatre capteurs qui tournent avec l'arbre moteur 3 autour de l'axe MM' et les circuits électroniques d'utilisation des signaux fournis par les condensateurs ; ces circuits électroniques sont fixes par rapport à l'axe MM' et le dispositif de couplage est, dans l'exemple décrit, un transformateur tournant à plusieurs enroulements, dont le rotor est solidaire de l'arbre moteur 3 et dont le stator est fixe par rapport à l'axe MM' de l'arbre 3.

Il est à noter que, à la liaison L1 du capteur selon la figure 1, correspond, dans la figure 6, la soudure entre la pièce 2 et la partie épaisse A du tube 30 tandis que la liaison L2 correspond, sur la figure 6, à la pièce 4 et à la soudure entre la pièce 4 et la partie épaisse B du tube 30.

A titre indicatif l'arbre moteur de la figure 6 est entraîné par un moteur de 300kW à une vitesse de rotation qui peut atteindre 10000 tours par minute, et son diamètre extérieur est de 5 centimètres.

La présente invention n'est pas limitée aux exemples décrits ci-avant, c'est ainsi que les capteurs capacitifs selon l'invention peuvent comporter un nombre entier quelconque d'électrodes régulièrement réparties ; et il est à remarquer qu'avec trois électrodes réparties à 120 degrés les unes des autres, il est possible d'effectuer les même mesures de déplacement qu'avec le capteur à quatre électrodes selon la figure 5 mais l'exploitation des signaux est plus compliquée.

De même avec un ou plusieurs capteurs capacitifs selon l'invention, il est possible de mesurer non seulement des angles de rotation d'une zone A par rapport une zone B mais il est également possible de mesurer tout déplacement de faible amplitude d'une zone par rapport à une autre, à condition que la disposition de ces zones autorise, entre elles, la réalisation d'un montage qui s'apparente au montage de principe selon la figure 1.

## Revendications

1. Capteur capacitif de déplacements comportant un premier et un second support (1, 2) ayant respectivement un premier et un second axe longitudinal, parallèles entre eux, ces supports étant munis d'électrodes (C0, C1-C4, G) pour former des condensateurs, caractérisé en ce que, pour mesurer des déplacements relatifs des deux supports perpendiculairement au premier et au second axe, le premier support (2) comporte un trou cylindrique dont l'axe géométrique constitue le premier axe, le second support (1) comporte un barreau cylindrique dont l'axe géométrique constitue le second axe, ce barreau étant disposé de manière à traverser librement le trou cylindrique du premier support et à avoir ainsi, avec la paroi du trou, des parois en regard, et les électrodes (C0, C1-C4, G) sont portées par les parois en regard du trou et du barreau et, au moins certaines (C1-C4,G), ont des limites parallèles au premier et au second axe.

2. Capteur capacitif selon la revendication 1, caractérisé en ce que la paroi du trou du premier support (2) est entièrement conductrice et constitue l'une des électrodes (C0), et en ce que le barreau cylindrique (1) est isolant et porte les autres électrodes (C1-C4, G).

3. Capteur capacitif selon la revendication 2, caractérisé en ce que lesdites autres électrodes comportent n électrodes principales (C1-C4), où n est un entier positif, disposées sensiblement selon n génératrices du barreau cylindrique et réparties à 360°/n les unes des autres, et une électrode de garde (G) qui entoure partiellement chacune des électrodes principales.

4. Capteur d'angle de torsion d'un arbre moteur d'axe géométrique donné (MM'), caractérisé en ce qu'il comporte : m capteurs capacitifs (m entier positif) selon l'une quelconque des revendications précédentes, disposés avec l'axe géométrique (ZZ') de leur barreau au moins sensiblement parallèle à l'axe (MM') de l'arbre moteur (3).

5. Capteur d'angle selon la revendication 4, caractérisé en ce qu'il comporte une pièce cylindrique creuse (30) destinée à être intercalée dans l'arbre moteur (3) pour en constituer un tronçon, et en ce que les m capteurs capacitifs sont logés à l'intérieur de la pièce cylindrique creuse, avec leurs premiers supports (2) solidaires de l'une des extrémités du tronçon et leurs barreaux (1) solidaires de l'autre extrémité du tronçon.

## Patentansprüche

1. Kapazitiver Verschiebungsmeßfühler in einem ersten und einem zweiten Träger (1, 2), die eine erste Längsachse bzw. eine dazu parallele zweite Längsachse aufweisen, wobei die Träger zur Bildung von Kondensatoren mit Elektroden (C0, C1-C4, G) versehen sind, dadurch gekennzeichnet, daß zum Messen relativer Verschiebungen der zwei Träger senkrecht zu der ersten und der zweiten Achse der erste Träger (2) ein zylindrisches Loch aufweist, dessen geometrische Achse die erste Achse bildet, daß der zweite Träger (1) einen zylindrischen Stab enthält, dessen geometrische Achse die zweite Achse bildet, wobei dieser Stab so angeordnet ist, daß er das zylindrische Loch des ersten Trägers frei durchdringt und somit der Wand des Lochs gegenüberliegende Wände aufweist, und daß die Elektroden (C0, C1-C4, G) von den gegenüberliegenden Wänden des Lochs und des Stabs getragen sind, wobei wenigstens einige (C1-C4, G) parallel zur ersten und zur zweiten Achse verlaufende Grenzen aufweisen.

2. Kapazitiver Fühler nach Anspruch 1, dadurch gekennzeichnet, daß die Wand des Lochs des ersten Trägers (2) vollständig leitend ist und eine der Elektroden (C0) bildet, und daß der zylindrische Stab (1) isolierend ist und die anderen Elektroden (C1-C4, G) trägt.

3. Kapazitiver Fühler nach Anspruch 2, dadurch gekennzeichnet, daß die anderen Elektroden n Hauptelektroden (C1-C4) enthalten, wobei n eine ganze positive Zahl ist, die im wesentlichen längs n Mantellinien des zylindrischen Stabs angeordnet sind und um 360°/n in bezug zueinander verteilt sind, sowie eine Schutzelektrode (G) aufweisen, die jede der Hauptelektroden teilweise umgibt.

4. Torsionswinkelfühler einer Motorwelle mit gegebener geometrischer Achse (MM'), dadurch gekennzeichnet, daß er enthält: m kapazitive Fühler (m ganzzahlig und positiv) gemäß einem der vorhergehenden Ansprüche, die so angeordnet sind, daß die geometrische Achse (ZZ') ihres Stabs zumindest angenähert parallel zur Achse (MM') der Motorwelle (3) verläuft.

5. Winkelfühler nach Anspruch 4, dadurch gekennzeichnet, daß er ein zylindrisches hohles Teil (30) enthält, das dazu bestimmt ist, in die Motorwelle (3) so eingefügt zu werden, daß es ein Stück davon bildet, und daß die m kapazitiven Fühler im Inneren des zylindrischen hohlen Teils angebracht sind, wobei ihre ersten Träger (2) fest mit einem der Enden des Stücks verbunden sind, während ihre Stäbe (1) fest mit dem anderen Ende des Stücks verbunden sind.

## Claims

1. Capacitive displacement sensor comprising a first and a second support (1, 2) having a first and second longitudinal axis respectively, parallel to one another, these supports being provided with electrodes (C0, C1-C4, G) to form capacitors, characterised in that, in order to measure relative displacements of the two supports perpendicularly to the first and second axes, the first support (2) includes a cylindrical hole whose geometrical axis constitutes the first axis, the second support (1) includes a cylindrical bar whose geometrical axis constitutes the second axis, this bar being arranged so as to pass freely through the cylindrical hole of the first support and to thus have, with the wall of the hole, facing walls, and the electrodes (C0, C1-C4, G) are held by the facing walls of the hole and of the bar and, at least some (C1-C4, G), have boundaries parallel to the first and second axes.

2. Capacitive sensor according to Claim 1, characterised in that the wall of the hole of the first support (2) is wholly conductive and constitutes one of the electrodes (C0), and in that the cylindrical bar (1) is insulating and holds the other electrodes (C1-C4, G).

3. Capacitive sensor according to Claim 2, characterised in that the said other electrodes comprise n main electrodes (C1-C4), where n is a positive integer, arranged substantially along n generatrices of the cylindrical bar and distributed at 360°/n from one another, and a guard electrode (G) which partially surrounds each of the main electrodes.

4. Torsional angle sensor for a motor shaft of given geometrical axis (MM'), characterised in that it includes: m capacitive sensors (m positive integer) according to any one of the preceding claims, arranged with the geometrical axis (ZZ') of their bar at least substantially parallel to the axis (MM') of the motor shaft (3).

5. Angle sensor according to Claim 4, characterised in that it includes a hollow cylindrical part (30) intended to be intercalated into the motor shaft (3) to constitute a piece thereof, and in that the m capacitive sensors are housed inside the hollow cylindrical part, with their first supports (2) integral with one of the ends of the piece and their bars (1) integral with the other end of the piece.
